# EUROPEAN PATENT APPLICATION

(11) **EP 4 752 466 A1**
(43) Date of publication of application: **03.06.2026**
(21) Application number: 25218667.1
(22) Date of filing: 26.11.2025
(51) Int. Cl.: F25B 49/02, F25B 13/00

(54) **LOAD SHIFTING USING FLOW CONTROL ASSEMBLY IN HEAT PUMP INTEGRATED WITH THERMAL ENERGY STORAGE**

(30) Priority: 27.11.2024 US 202463726039 P; 18.07.2025 US 202563846739 P
(71) Applicant: Carrier Corporation, Palm Beach Gardens, FL 33418 (US)
(72) Inventor: WANG, Chaojie, Shanghai 201206 (CN); SHEN, Guangyu, Shanghai 201206 (CN); ZHAI, Hui, Shanghai 201206 (CN); MAKWINSKI, Mark, Shanghai 201206 (CN)
(74) Representative: Dehns

(57) **Abstract**

Described herein is a heat pump (100) including an outdoor unit (110) and an indoor unit (IDU) (120), a thermal energy storage (TES) module (130), and a flow control assembly (140). The flow control assembly (140) includes a check valve assembly (145) fluidically coupled to the outdoor unit (110), and a selective flow assembly (150) fluidically coupled to the check valve assembly (145) and in selective fluidic communication with the IDU (120) and/or the TES module (130), where the selective flow assembly (150) is configured to selectively direct a fluid between at least one of, the IDU (120) and/or the TES module (130) and the check valve assembly (145).

## Description

### CROSS-REFERENCE TO RELATED APPLICATION

This patent application claims the benefit of U.S. Provisional Patent Application No. 63/726,039, filed on November 27, 2024, and U.S. Provisional Patent Application No. 63/846,739, filed on July 18, 2025, which are incorporated by reference herein in their entirety.

### BACKGROUND

The subject disclosure relates to heat pumps, and more particularly, to load shifting in heat pumps integrated with thermal energy storage modules.

### SUMMARY

According to a first aspect of the invention, there is provided a heat pump comprising an outdoor unit and an indoor unit, a thermal energy storage (TES) module, and a flow control assembly. The flow control assembly comprises a check valve assembly fluidically coupled to the outdoor unit, and a selective flow assembly fluidically coupled to the check valve assembly and in selective fluidic communication with the indoor unit and/or the thermal energy storage module, wherein the selective flow assembly is configured to selectively direct a fluid between the check valve assembly and at least one of: the IDU and/or the TES module.

Optionally, the thermal energy storage module comprises any or a combination of latent or sensible heat energy storage.

Optionally, one or more of the outdoor unit, the thermal energy storage module, and/or the flow control assembly is disposed in an outdoor environment.

Optionally, one or more of the indoor unit, the thermal energy storage module, and/or the flow control assembly is disposed in an indoor environment.

Optionally, one or more of the indoor unit, the thermal energy storage module, and/or the outdoor unit comprises a corresponding expansion device.

Optionally, the heat pump further comprises at least one of, a supply line and/or a return line fluidically coupling the check valve assembly to the selective flow assembly, wherein the selective flow assembly is configured to receive the fluid through the supply line from the check valve assembly and/or return the fluid through the return line to the check valve assembly.

Optionally, the selective flow assembly comprises a receiving component configured to receive the fluid from the supply line.

Optionally, the receiving component comprises at least one of, a separator and/or a tee junction disposed between the check valve assembly and the selective flow assembly.

Optionally, the selective flow assembly further comprises at least one selective flow subassembly configured to fluidically couple the supply line and/or the return line to at least one of, the indoor unit and/or the thermal energy storage module, and wherein the at least one selective flow subassembly comprises, a first valve configured to selectively enable fluidic communication between the supply line and at least one of, the indoor unit and/or the thermal energy storage module, and a second valve configured to selectively enable fluidic communication between the return line and at least one of, the indoor unit and/or the thermal energy storage module.

Optionally, the first valve and the second valve comprise a unidirectional valve.

Optionally, the first valve and the second valve are disposed in parallel with respect to the thermal energy storage module and/or the indoor unit.

Optionally, the selective flow assembly further comprises a flow diversion assembly fluidically coupling the supply line to at least one of, a thermal energy storage-assembly line fluidically coupled to the thermal energy storage module, and/or an indoor unit-assembly line fluidically coupled to the indoor unit, wherein the flow diversion assembly further comprises at least one directional control valve configured to selectively couple the thermal energy storage-assembly line, the indoor unit-assembly line, and/or the supply line, and wherein the at least one directional control valve is configured to selectively direct the fluid from the supply line to at least one of, the thermal energy storage module, and/or the indoor unit.

Optionally, the flow diversion assembly is fluidically coupled to the return line, and wherein the flow diversion assembly further comprises another directional control valve configured to selectively direct the fluid from at least one of, the thermal energy storage module and/or the indoor unit to the return line.

Optionally, the flow diversion assembly is configured to selectively direct the fluid between the indoor unit and the thermal energy storage module.

Optionally, the at least one directional control valve comprises a bidirectional valve.

Optionally, the heat pump further comprises a first ODU-assembly line and a second outdoor unit-assembly line fluidically coupling the check valve assembly and the outdoor unit, wherein the check valve assembly optionally comprises a plurality of check valves fluidically coupled to receive the fluid from the return line and/or the first outdoor unit-assembly line, and direct the received fluid to at least one of, the supply line and/or the second outdoor unit-assembly line.

Optionally, the outdoor unit comprises a reversing valve configured to shift the heat pump to a space cooling operational mode or a space heating operational mode.

Optionally, the selective flow assembly is configured to selectively flow the fluid through any one or a combination of the thermal energy storage module and/or the indoor unit to shift the heat pump to an energy charging mode or an energy discharging mode, and optionally wherein the selective flow assembly is configured to operate the heat pump in the energy charging mode or the energy discharging mode in any combination with the operation of the heat pump in at least one of, a space cooling operational mode and/or a space heating operational mode.

According to a second aspect of the invention, there is provided a flow control assembly fluidically coupled to an outdoor unit, an indoor unit, and/or a thermal energy storage module, the flow control assembly comprising, a check valve assembly fluidically coupled to the outdoor unit, a selective flow assembly fluidically coupled to the check valve assembly and in selective fluidic communication with the indoor unit and/or the thermal energy storage module, wherein the selective flow assembly is configured to selectively direct a fluid to between the check valve assembly and at least one of, the indoor unit and/or the thermal energy storage module.

According to a third aspect of the invention, there is provided a method for operating a heat pump, where the method comprises providing an ODU, an IDU, a TES module, and a flow control assembly, and controlling, by a controller, the flow control assembly to selectively direct a fluid between the ODU and at least one of, the IDU and/or the TES module.

The foregoing summary is illustrative only and is not intended to be in any way limiting. In addition to the illustrative aspects, embodiments, and features described above, further aspects, embodiments, features, and techniques of the disclosure will become more apparent from the following description taken in conjunction with the drawings.

### BRIEF DESCRIPTION OF THE DRAWINGS

The accompanying drawings are included to provide a further understanding of the subject disclosure, and are incorporated into and constitute a part of this specification. The drawings illustrate exemplary embodiments of the subject disclosure and, together with the description, serve to explain the principles of the subject disclosure.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.

Certain exemplary embodiments will now be described in greater detail by way of example only and with reference to the accompanying drawings in which:
FIG. 1A illustrates a thermal energy storage (TES) module integrated heat pump having the TES module in an outdoor environment;
FIG. 1B illustrates a TES module integrated heat pump having the TES module in an indoor environment;
FIG. 1C illustrates an isolated view of a flow control assembly of a heat pump;
FIG. 1D illustrates an isolated view of a selective flow assembly of a flow control assembly;
FIGs. 2A to 2H illustrate operational modes of a heat pump integrated with a TES module.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition that persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this disclosure may be positioned in any desired orientation. Thus, the use of terms such as "above," "below," "upper," "lower," "first," "second," or other like terms to describe a spatial relationship between various components or to describe the spatial orientation of aspects of such components should be understood to describe a relative relationship between the components or a spatial orientation of aspects of such components.

The use of the term "about" with reference to a numerical value includes ±15% of the numerical value.

As used herein, "substantially" means largely or considerably, but not necessarily wholly, or sufficiently to work for the intended purpose. The term "substantially" thus allows for minor, insignificant variations from an absolute or perfect state, dimension, measurement, result, or the like as would be expected by a person of ordinary skill in the art, but that do not appreciably affect overall performance.

Heat pump systems are widely used for providing space conditioning, such as cooling and heating, for residential and commercial buildings. Heat pump systems may include an outdoor unit (ODU) and an indoor unit (IDU) fluidically coupled by a refrigerant circuit. Often, the operation of the heat pump systems coincides with periods of high energy demand on the electrical grid, which may present challenges for energy efficiency and grid stability. To address the mismatch between energy supply and demand, thermal energy storage (TES) systems can be used to store thermal energy during off-peak periods (e.g., when electricity rates are lower or renewable energy is abundant) and discharge the stored energy during peak demand periods.

However, integrating a TES system with a conventional heat pump system often requires substantial modifications to the components of the heat pump and internal refrigerant circuitry of the ODU and/or the IDU. For example, additional valves may need to be installed within the ODU, and internal piping may need to be re-routed. Such modifications may be costly, complex, and do not support retrofitting of the TES into existing heat pumps.

The subject disclosure provides for the integration of a TES module with an ODU and an IDU of a heat pump via a flow control assembly, without requiring modification to the ODU or IDU. The flow control assembly may include a check valve assembly fluidically coupled to the ODU. Further, the flow control assembly includes a selective flow valve assembly fluidically coupled to the check valve assembly. The selective flow valve assembly may be in selective fluidic communication with the IDU and/or the TES module, allowing the heat pump to operate in a plurality of operational modes. The ODU may include a reversing valve, which in conjunction with the check valve assembly, may support operational modes such as space cooling and space heating. The selective flow valve assembly may further enable operational modes involving the TES module, including cool energy storage, cool energy discharge, heat energy storage, heat energy discharge, and combined modes such as simultaneous space cooling and cool energy storage. The heat pump may also be configured to perform a defrost operational mode using heat from the TES module. The flow control assembly enables the heat pump to operate in such operational modes, without requiring modifications to internal circuitry of the ODU, IDU, and/or TES modules, thereby allowing for retrofitting.

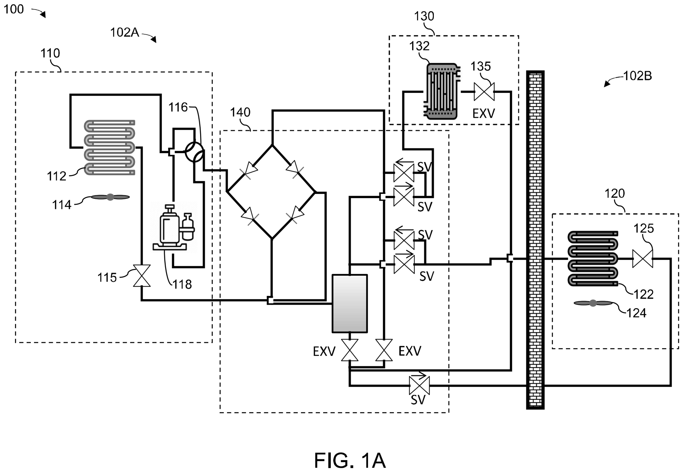

Various embodiments of the subject disclosure are described in detail in reference to FIGs. 1A to 2H.

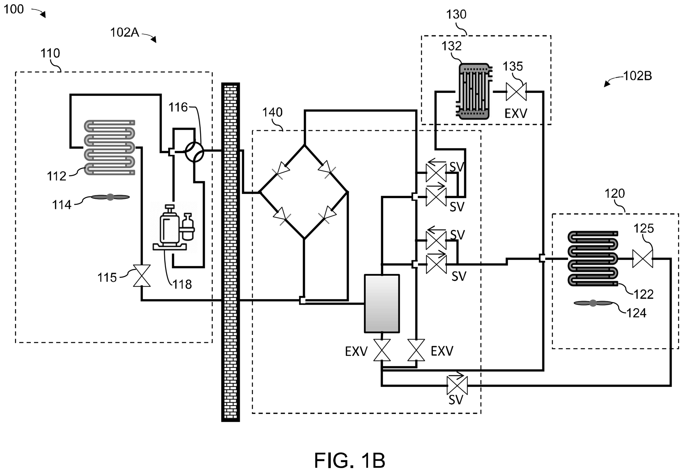

Referring to FIGs. 1A and 1B, schematic diagrams of a heat pump 100 are shown. The heat pump 100 may include an ODU 110, an IDU 120, a TES module 130, and a flow control assembly 140. The heat pump 100 may be configured to operate in a split configuration, with certain components located in an outdoor environment 102A and other components located in an indoor environment 102B (corresponding to an indoor space, such as a room of a building, or a container). FIG. 1A illustrates an embodiment where the ODU 110, the flow control assembly 140, and the TES module 130 are located in the outdoor environment 102A. FIG. 1B illustrates an embodiment where the IDU 120, the flow control assembly 140, and the TES module 130 are located in the indoor environment 102B.

It is to be noted that the placement of the components of the heat pump shown in the figures is for illustration. For example, in some embodiments, one or more of the flow control assembly 140, the TES module 130, and/or other components may be located in the indoor environment 102B. In other embodiments, one or more of the flow control assembly 140, the TES module 130, and/or other components may be located in the outdoor environment 102A.

In one or more embodiments, the ODU 110 may include an outdoor heat exchanger 112, an outdoor fan 114, an outdoor expansion device 115, a reversing valve 116, and a compressor 118. The compressor 118 may be configured to compress and circulate a refrigerant through the heat pump 100. The reversing valve 116 may be a four-way valve configured to reverse the direction of refrigerant flow to switch the heat pump 100 between cooling and heating operational modes. The outdoor heat exchanger 112 may be configured to function as a condenser during a cooling mode to reject heat to the outdoor environment 102A, and/or as an evaporator during a heating mode to absorb heat from the outdoor environment 102A. The outdoor fan 114 may be configured to generate a flow of ambient air across the outdoor heat exchanger 112 to facilitate heat exchange. The outdoor expansion device 115 may be configured to reduce the pressure of (or expand) the refrigerant before the refrigerant enters the outdoor heat exchanger 112 when the outdoor heat exchanger 112 is operating as an evaporator.

In one or more embodiments, the IDU 120 may be located in the indoor environment 102B. In one or more embodiments, the IDU 120 may include one or more of an indoor heat exchanger 122, an indoor fan 124, an indoor expansion device 125, and/or other components. The indoor heat exchanger 122 may be configured to function as an evaporator during a cooling mode to absorb heat from the indoor environment 102B, and/or as a condenser during a heating mode to reject heat into the indoor environment 102B. The indoor fan 124 may be configured to circulate indoor air across the indoor heat exchanger 122 to provide conditioned air to the indoor space. The indoor expansion device 125 may be configured to reduce the pressure of (or expand) the refrigerant before the refrigerant enters the indoor heat exchanger 122 when the indoor heat exchanger 122 is operating as an evaporator.

In one or more embodiments, the TES module 130 may include a TES 132. In one or more embodiments, the TES module 130 may include a TES expansion device 135. The TES 132 may be configured to store and release thermal energy. In one or more embodiments, the refrigerant may be circulated through the TES 132. The TES 132 may be thermally coupled to the refrigerant, such as through pipes and/or conduits that facilitate heat exchange between the refrigerant and the TES 132. In one or more embodiments, the TES 132 may be charged (i.e., causing thermal energy to be stored) when hot refrigerant is flowed through the TES 132. In one or more embodiments, the TES 132 may be charged with cool energy (i.e., thermal energy is removed) when cold refrigerant is flowed through the TES 132.

In one or more embodiments, the TES 132 may be configured for latent heat storage and/or sensible heat storage. In one or more embodiments, for latent heat storage, the TES 132 may include a phase change material (PCM). The PCM may include any one or a combination of, salts, polymers, gels, paraffin waxes, metal alloys, semiconductor-metal alloys, water, salt hydrates, bio-based materials and the like, but not limited thereto. The TES 132 may be configured to store and release energy at a nearly constant temperature during phase transition. In such embodiments, the TES 132 may be structured as a heat exchanger immersed within the PCM. In one or more embodiments, for sensible heat storage, the TES 132 may include sensible heat storage materials such as water or solid media, where energy is stored by changing the temperature of the sensible heat storage materials. The TES 132 may be constructed as a single unit or as a plurality of modular blocks to provide scalable storage capacity.

In one or more embodiments, the TES expansion device 135 may be configured to control the flow of refrigerant into the TES 132. The TES expansion device 135 may be configured to expand the refrigerant flowed through the TES 132. In one or more embodiments, the TES expansion device 135 may be controlled based on the operational mode in which the heat pump 100 is to be operated.

To enable fluidic communication between the ODU 110, the IDU 120, and the TES module 130, and to allow the heat pump 100 to operate in a plurality of modes, the heat pump 100 may be provided with the flow control assembly 140. In one or more embodiments, the flow control assembly 140 may be retrofitted to existing heat pumps. Accordingly, fluidic communication between the IDU, ODU, and/or the TES module may be adapted to couple to the flow control assembly 140 instead of each other, without requiring changes to the internal circuitry thereof. In one or more embodiments, the flow control assembly 140 may be fluidically coupled to the ODU 110. Further, the flow control assembly 140 may be configured for selective fluidic communication with the IDU 120 and/or the TES module 130 to manage refrigerant flow for different operational modes, such as space cooling, space heating, TES charging, TES discharging, and combinations thereof.

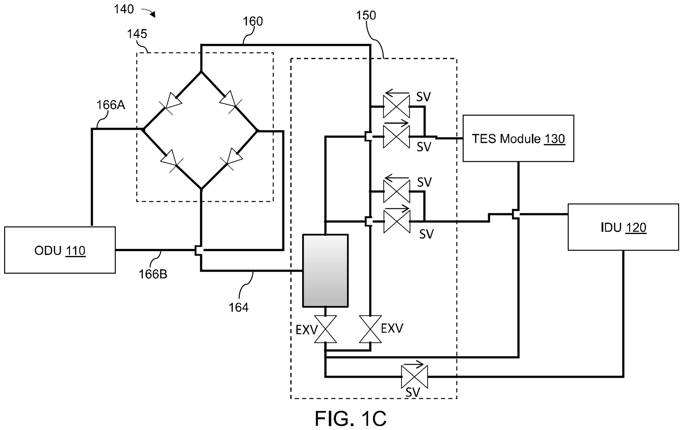

Referring to FIG. 1C, a detailed schematic of the flow control assembly 140 is shown. In one or more embodiments, the flow control assembly 140 may include a check valve assembly 145 and a selective flow assembly 150. In one or more embodiments, the check valve assembly 145 may be fluidically coupled to the ODU 110. The check valve assembly 145 may be fluidically coupled to the ODU 110 via ODU-assembly lines 166A and 166B. The selective flow assembly 150 may be fluidically coupled to the check valve assembly 145 via a supply branch/line 164 and a return branch/line 160. Further, in one or more embodiments, the selective flow assembly 150 may be in selective fluidic communication with the IDU 120 and the TES module 130.

In one or more embodiments, the flow control assembly 140 may include a plurality of selective flow assemblies. In such embodiments, the selective flow assemblies may be arranged in parallel. In such embodiments, each of the selective flow assemblies may be coupled to a corresponding one of or at least one of the IDU 120, the TES module 130, and/or the check valve assembly 145.

In one or more embodiments, the check valve assembly 145 may be configured to facilitate the fluidic coupling between the ODU 110 and the rest of the heat pump 100, such as the selective flow assembly 150. In one or more embodiments, the check valve assembly 145 may receive a fluid, such as the refrigerant, from the ODU 110 through one of the ODU-assembly lines (e.g., line 166A) and have the fluid returned to the ODU 110 through the other line (e.g., line 166B), with the flow direction reversing based on the operational mode of the heat pump 100. Further, the check valve assembly 145 may be configured to direct the incoming refrigerant from the ODU 110 to the selective flow assembly 150 via the supply branch 164. Similarly, the check valve assembly 145 may be configured to receive the refrigerant from the selective flow assembly 150 via the return branch 160 and direct the refrigerant back to the ODU 110 through the corresponding ODU-assembly line.

In one or more embodiments, the check valve assembly 145 may include four check valves arranged in a diamond or bridge configuration. Each line forming the diamond configuration may include a corresponding check valve. Each of the check valves may be configured to allow unidirectional flow of the fluid/refrigerant therethrough. The check valves may be positioned to allow the fluid/refrigerant to flow towards a predefined direction. In one or more embodiments, the check valves may be oriented to allow the refrigerant to flow towards the supply line 164, as shown in FIG. 1C.

In one or more embodiments, each vertex of the diamond configuration may be fluidically coupled to a respective line. For instance, a first vertex may be coupled to line 166A, a second vertex to line 166B, a third vertex to the supply line 164 leading to the selective flow assembly 150, and a fourth vertex to the return branch 160 originating from the selective flow assembly 150. In one or more embodiments, the lines 166A, 166B, the supply line 164, and the return line 160 may be arranged alternatingly. For instance, the first vertex may be coupled to line 166A, the second vertex to supply line 164, the third vertex to line 166B, and the fourth vertex to the return line 160, wherein the first to fourth vertices are arranged in a clockwise or a counterclockwise arrangement with respect to the view shown in FIG. 1C. In one or more embodiments, such arrangements may allow for passive redistribution of the fluid/refrigerant flow between the lines 166A, 166B to the ODU 110, and/or the supply line 164 and return line 160 to the selective flow assembly 150.

Further, in such arrangements, the check valve assembly 145 may be configured to direct the incoming refrigerant to the selective flow assembly 150 via the supply branch 164, regardless of the operational mode (i.e., regardless of whether refrigerant enters from line 166A or 166B). Similarly, the check valve assembly 145 may receive refrigerant from the selective flow assembly 150 via the return branch 160 and direct the refrigerant back to the ODU 110 through the appropriate return line, based on the operational mode.

In other embodiments, the check valve assembly 145 may include an active component, such as a (liquid-rated) four-way reversing valve. In such embodiments, the active component may be controlled to change the pairing between inlet and outlet ports of the active component to ensure a consistent flow direction to and from the selective flow assembly 150, and/or the ODU 110. In one or more embodiments, the active component may be operated synchronously with the reversing valve 116.

In one or more embodiments, the selective flow assembly 150 may be configured to direct the flow of refrigerant received from the check valve assembly 145 towards other components of the heat pump 100, such as the TES module 130 and/or the IDU 120. The selective flow assembly 150 may receive the fluid/refrigerant from the supply branch 164. Further, the selective flow assembly 150 may be configured to selectively direct the fluid/refrigerant to the TES module 130 and/or the IDU 120, based on the operational mode of the heat pump 100. In one or more embodiments, the selective flow assembly 150 may be configured to receive the fluid/refrigerant passed through the TES module 130 and/or the IDU 120, and direct the fluid/refrigerant through the return line 160.

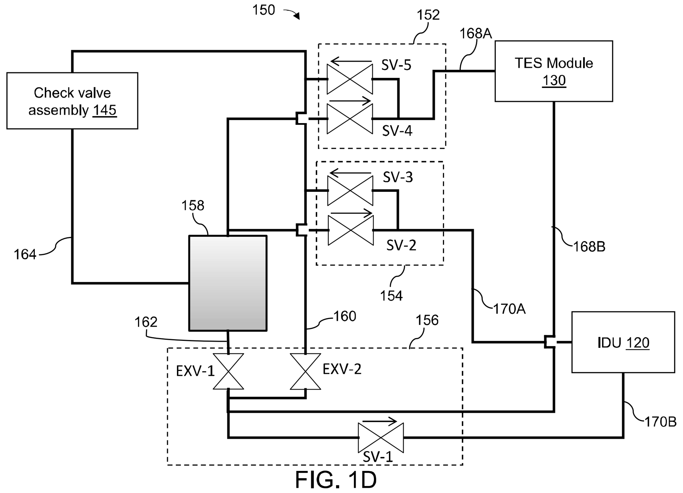

Referring to FIG. 1D, a schematic view of the selective flow assembly 150 is shown. In one or more embodiments, the selective flow assembly 150 may be fluidically coupled to the check valve assembly 145 via the supply line/branch 164 and the return line/branch 160. The selective flow assembly 150 may be further fluidically coupled to the TES module 130 via TES-assembly lines 168A and 168B, and to the IDU 120 via IDU-assembly lines 170A and 170B.

In one or more embodiments, the selective flow assembly 150 may include a receiving component configured to receive the fluid/refrigerant from the supply line 164. In one or more embodiments, the receiving component may include a separator 158. As the refrigerant may be in a two-phase state in certain operational modes, the receiving component may include the separator 158 configured to separate the liquid and vapor phases of the fluid/refrigerant. The liquid refrigerant may collect at a lower portion of the separator 158, while the vapor refrigerant/fluid may collect at an upper portion. The separation of the liquid and vapor fluid/refrigerant allows for routing of liquid and vapor fluid refrigerant to different downstream components, as required by different operational modes. In other embodiments, the receiving component may include a tee junction. The tee junction may be configured to split the incoming refrigerant flow from the supply line 164 into multiple downstream paths.

In one or more embodiments, the selective flow assembly 150 may branch into a plurality of sub-assemblies. In one or more embodiments, the selective flow assembly 150 may include at least one selective flow subassembly, such as one for each of the TES module 130 and the IDU 120. The selective flow assembly 150 may include a first selective flow subassembly 152, a second selective flow subassembly 154, and/or a flow diversion assembly 156.

In one or more embodiments, the first selective flow subassembly 152 may be configured to be in selective fluidic communication with the TES module 130 through the TES-assembly lines 168A/168B. The second selective flow subassembly 154 may be configured to be in selective fluidic communication with the IDU-assembly lines 170A/170B.

In one or more embodiments, a selective flow subassembly (such as the first selective flow subassembly 152 and/or the second selective flow subassembly 154) may be configured to fluidically couple the supply line 164 and/or the return line 160 to the corresponding module (i.e., the IDU 120 or the TES module 130). For example, the second selective flow subassembly 154, associated with the IDU 120, may include a first valve (such as solenoid valve SV-2) and a second valve (such as solenoid valve SV-3). The first valve SV-2 may be configured to selectively enable fluidic communication between the receiving component 158 (which receives fluid from the supply line 164) and the IDU 120 via the IDU-assembly line 170A. The second valve SV-3 may be configured to selectively enable fluidic communication between the IDU 120 (via line 170A) and the return line 160.

In one or more embodiments, the first and second valves (such as SV-2 and SV-3) may be disposed in parallel with respect to the fluidic path through the IDU-assembly line 170A. The valves may include unidirectional valves, such as solenoid-actuated check valves, electric expansion valves, and/or motorized ball valves, that permit flow in only one direction, as indicated by the arrows. The parallel, unidirectional arrangement allows line 170A to function as either an inlet or an outlet for the IDU 120 depending on which valve is actuated. For example, to direct refrigerant from the separator 158/tee junction to the IDU 120 through line 170A, valve SV-2 may be opened while valve SV-3 remains closed. Conversely, to direct refrigerant returning from the IDU 120 through line 170A to the return line 160, valve SV-3 may be opened while valve SV-2 remains closed.

Similarly, the first selective flow subassembly 152, associated with the TES module 130, may include a first valve (such as solenoid valve SV-4) and a second valve (such as solenoid valve SV-5) arranged in parallel. The first valve SV-4 may be configured to selectively direct refrigerant from the separator 158 to the TES module 130 via TES-assembly line 168A. The second valve SV-5 may be configured to selectively direct refrigerant returning from the TES module 130 via line 168A to the return line 160. Such configurations provide independent control over the flow to and from the TES module 130 through line 168A.

In one or more embodiments, the selective flow subassembly may be disposed on one or both of the lines between the separator 158 or tee junction, and the TES module 130 and/or the IDU 120. For instance, while FIGs. 1A to 1D show the selective flow subassembly disposed on the TES-assembly line 168A and IDU-assembly line 170A, it may be appreciated that the heat pump 100 may be suitably adapted to include the selective flow subassembly disposed at the TES-assembly line 168B and/or IDU-assembly line 170B, or both the TES-assembly lines 168A, 168B and/or IDU-assembly lines 170A, 170B, or any combination thereof.

In one or more embodiments, the selective flow assembly 150 may include a flow diversion assembly (such as flow diversion assembly 156). The flow diversion assembly 156 may be fluidically coupled to an outlet of the receiving component. In one or more embodiments, the flow diversion assembly 156 may include a liquid line 162 extending from the receiving component. The liquid line 162 may split into at least one path to the TES module 130 and/or the IDU 120. For instance, the liquid line 162 may branch into the TES-assembly line 168B and/or the IDU-assembly line 170B. In one or more embodiments, the flow diversion assembly 156 (through the liquid line 162) may be fluidically coupled to the return line 160.

In one or more embodiments, the flow diversion assembly 156 may include one or more directional control valves configured to selectively direct the fluid/refrigerant from the supply side to the TES module 130 and/or the IDU 120. In the embodiment shown, the flow diversion assembly 156 includes a first expansion valve EXV-1 disposed on a branch fluidically coupled to the TES-assembly line 168B, and a second expansion valve EXV-2 disposed on a branch fluidically coupled to the return line 160. Further, the flow diversion assembly 156 may include a solenoid valve SV-1 disposed on the IDU-assembly line 170B. The valves (EXV-1, EXV-2) may function as both directional control valves and expansion devices. The valves (EXV-1, EXV-2) may allow bidirectional flow therethrough. The solenoid valve SV-1 may be configured to operably allow unidirectional flow therethrough.

For instance, to direct expanded liquid/fluid refrigerant to the TES module 130, the valve EXV-1 may be opened, allowing the fluid refrigerant to flow from the supply line 164 (through the separator 158/tee junction), through line 162 and enter the TES module 130 via line 168B. To direct liquid fluid/refrigerant to the IDU 120, the valve EXV-2 may be opened, allowing refrigerant to flow from the supply line 164 (through the separator 158/tee junction), through line 162, and enter the IDU 120 via line 170B.

In one or more embodiments, the solenoid valve SV-1 may be configured to control the return flow of refrigerant from the IDU 120. The directional control valves within the flow diversion assembly 156 (such as SV-1, EXV-1, EXV-2) may include bidirectional valves in some embodiments, or may be configured as part of a circuit with unidirectional valves that collectively achieve selective, directional flow control. The combination of the selective flow subassemblies (152, 154) and the flow diversion assembly 156 provides a high degree of control, enabling the heat pump 100 to operate in its numerous distinct operational modes by precisely routing refrigerant in different phases to and from the IDU 120 and the TES module 130.

In one or more embodiments, the configuration of the flow control assembly 140 enables the heat pump 100 to operate in a plurality of operational modes. The operational modes may include, but are not limited to, a space cooling mode, a space heating mode, a cool energy storage mode, a cool energy discharge mode, a heat energy storage mode, a heat energy discharge mode, a combined space cooling and cool energy storage mode, a combined space heating and heat energy storage mode, and/or a defrost mode, but not limited thereto. The operational modes include standard space heating and space cooling operations, where the IDU 120 and/or the ODU 110 may be operated for conditioning (i.e., heating and cooling, respectively) the indoor space. The selective actuation of valves within the selective flow assembly 150 allows the standard operational modes to be combined with TES module 130 charging and discharging operations. Furthermore, the TES module 130 may be charged or discharged independently of space conditioning operations, and the heat pump 100 may be configured to perform the defrost mode, which may utilize heat discharged from the TES module 130 for defrosting.

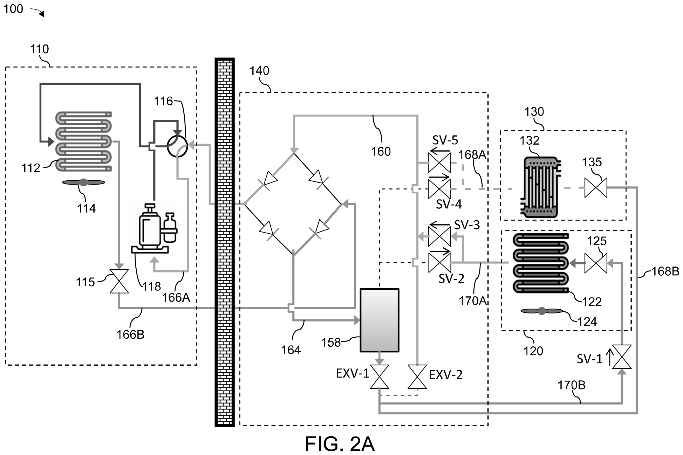

Referring to FIG. 2A, a schematic diagram of the heat pump 100 operating in a space cooling mode is shown. In one or more embodiments, the space cooling mode may be configured to condition the indoor environment 102B by absorbing heat from the indoor space and rejecting the heat to the outdoor environment 102A. The TES module 130 may be fluidically isolated and inactive during the space cooling mode.

In one or more embodiments, to initiate the space cooling cycle, the compressor 118 may be actuated to compress the fluid (such as a refrigerant) to a high-pressure, high-temperature vapor. The reversing valve 116 may be positioned to direct the vapor fluid/refrigerant into the outdoor heat exchanger 112. The outdoor fan 114 may be actuated to force ambient air across the outdoor heat exchanger 112, which functions as a condenser. As the refrigerant flows through the outdoor heat exchanger 112, the refrigerant rejects heat to the outdoor environment 102A and condenses into a high-pressure liquid. The liquid refrigerant then flows through the outdoor expansion device 115, which may be in a fully open position, and enters the flow control assembly 140.

In one or more embodiments, upon entering the flow control assembly 140, the high-pressure liquid refrigerant flows through the check valve assembly 145, which directs the refrigerant into the supply line 164 and subsequently into the separator 158 (or the tee junction). Within the selective flow assembly 150, a set of valves (such as those of the flow diversion assembly 156) may be actuated to direct the refrigerant to the IDU 120 while isolating the TES module 130. For instance, the valves associated with the TES module 130 (such as solenoid valve SV-4 and the TES expansion device 135) may be shifted to a closed position. Further, to direct refrigerant to the IDU 120, expansion valve/device EXV-1 and/or the solenoid valve SV-1 may be shifted to an open position. In one or more embodiments, the refrigerant may be flowed from the separator 158/tee junction to the IDU 120, through the expansion valve/device EXV-1 and the IDU-assembly line 170B.

In one or more embodiments, the high-pressure refrigerant enters the IDU 120 and passes through the indoor expansion device 125. The indoor expansion device 125 expands the refrigerant, causing a drop in pressure and temperature, resulting in a low-pressure, low-temperature two-phase fluid. The refrigerant then flows through the indoor heat exchanger 122, which functions as an evaporator. The indoor fan 124 may be actuated to circulate air from the indoor environment 102B across the coils of the indoor heat exchanger 122. The refrigerant absorbs heat from the indoor air, causing the refrigerant to evaporate into a low-pressure vapor and thereby providing a cooling effect to the indoor environment 102B.

In one or more embodiments, to complete the refrigerant cycle, the low-pressure vapor exits the IDU 120 and returns to the selective flow assembly 150 (such as the second selective flow subassembly 154) via the IDU-assembly line 170A. To facilitate the return flow, valve SV-2 may be closed and valve SV-3 may be opened. The low-pressure vapor flows through the open valve SV-3 and into the return line 160. From the return line 160, the refrigerant passes through the check valve assembly 145, which directs the refrigerant back to the ODU 110. The refrigerant then flows through the reversing valve 116 to the suction inlet of the compressor 118, where the cycle may be repeated.

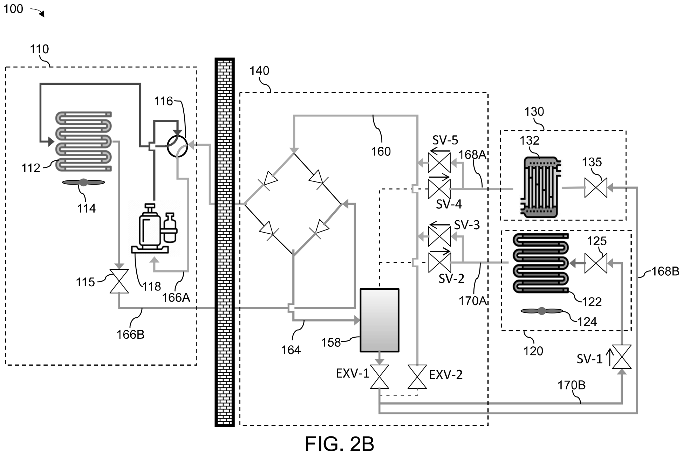

Referring to FIG. 2B, a schematic diagram of the heat pump 100 operating in a combined space cooling and cool energy charge mode is shown. In one or more embodiments, the combined space cooling and cool energy charge operational mode may be configured to simultaneously provide cooling to the indoor environment 102B while also charging the TES module 130 with cool thermal energy (i.e., removing heat from the TES module 130). The space cooling portion of the cycle may operate substantially as described with reference to FIG. 2A.

In one or more embodiments, in addition to the primary space cooling refrigerant flow, a portion of the high-pressure liquid fluid/refrigerant from the separator 158/tee junction may be diverted to the TES module 130. To enable such a parallel flow path, specific valves associated with the TES module 130 may be actuated. For example, expansion valve/device EXV-1 and the TES expansion device 135 may be shifted to an open position.

In one or more embodiments, the diverted liquid refrigerant may flow from the supply line 164 (such as from the separator 158) through the liquid line 162, and may be expanded by the open expansion valve/device EXV-1 and subsequently by the TES expansion device 135. The expansion causes a drop in pressure and temperature, resulting in a low-pressure, low-temperature two-phase fluid. The cold fluid/refrigerant then flows through the TES 132. As the fluid/refrigerant passes through the TES 132, the fluid/refrigerant absorbs heat from the thermal storage medium, which lowers the temperature of the medium, to "cool charge" the TES 132. The refrigerant evaporates into a low-pressure vapor.

In one or more embodiments, the low-pressure vapor exits the TES 132 via the TES-assembly line 168A and returns to the selective flow assembly 150, such as to the first selective flow subassembly 152. In one or more embodiments, the solenoid valve SV-5 within the first selective flow subassembly 152 may be shifted to an open position, while solenoid valve SV-4 remains closed. The vapor flows through the open valve SV-5 and enters the return line 160. In the return line 160, the low-pressure vapor from the TES module 130 merges with the low-pressure vapor returning from the IDU 120. The combined refrigerant stream then flows through the check valve assembly 145 and returns to the suction inlet of the compressor 118 to complete the cycle.

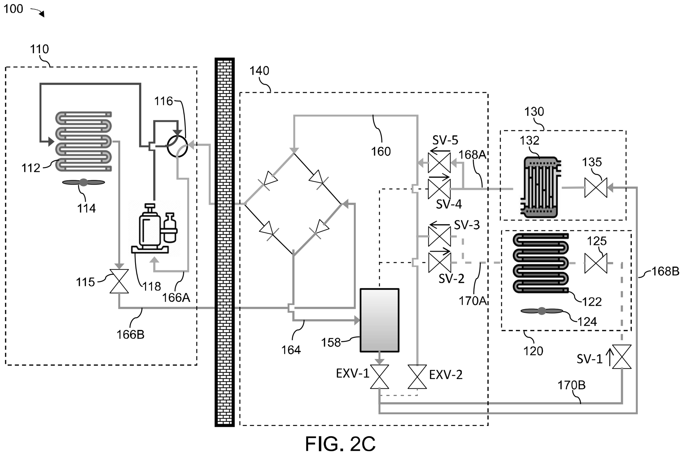

Referring to FIG. 2C, a schematic diagram of the heat pump 100 operating in a cool energy charge mode is shown. In one or more embodiments, in the cool energy charge operational mode, the heat pump 100 may be configured to charge the TES module 130 with cool thermal energy during periods of low energy demand or cost, without conditioning the indoor space. In the cool energy charge operational mode, the IDU 120 may be fluidically isolated, and the indoor fan 124 may be deactivated.

In one or more embodiments, in the cool energy charge operational mode, the heat pump 100 may operate similarly to the cooling modes, with the compressor 118 compressing the fluid/refrigerant and the reversing valve 116 directing the high-pressure vapor to the outdoor heat exchanger 112, which functions as a condenser. The refrigerant condenses to a high-pressure liquid and flows through the flow control assembly 140 via the supply line 164 into the separator 158/tee junction.

In one or more embodiments, within the selective flow assembly 150, valves may be actuated to direct the entire flow of refrigerant to the TES module 130 while isolating the IDU 120. For instance, the valves associated with the IDU 120 (such as SV-2, SV-3, and SV-1) and the expansion device/valve EXV-2 may be shifted to a closed position. The refrigerant flow may be directed from the supply side to the TES module 130 by opening the expansion valve/device EXV-1 and the TES expansion device 135.

In one or more embodiments, the high-pressure liquid refrigerant flows from the separator 158/tee junction through the liquid line 162 and may be expanded to a low-pressure, low-temperature state by the expansion valve/device EXV-1 and/or the TES expansion device 135. The cold refrigerant then enters and flows through the TES 132 via the TES-assembly line 168B. As the refrigerant passes through the TES 132, the refrigerant absorbs heat from the TES 132, causing the refrigerant to evaporate into a low-pressure vapor.

In one or more embodiments, the resulting vapor refrigerant may exit the TES 132 via the TES-assembly line 168A and returns to the first selective flow subassembly 152. Then, solenoid valve SV-5 may be shifted to an open position, allowing the vapor refrigerant to flow into the return line 160. From the return line 160, the refrigerant passes through the check valve assembly 145 and is directed back to the suction inlet of the compressor 118.

In one or more embodiments, the heat pump 100 may be configured to operate in a defrost operational mode. During operation in cold and humid conditions, such as during the space heating mode, frost or ice may accumulate on the surfaces of the outdoor heat exchanger 112, which may impede airflow and reduce the efficiency of the heat pump 100. The defrost operational mode may be initiated to melt and remove the accumulated frost. In one or more embodiments, the flow of the fluid/refrigerant during the defrost mode may be substantially identical to the flow during the cool energy charge mode (as shown in FIG. 2C). In the defrost mode, the TES 132 may function as an evaporator, releasing stored thermal energy to heat up and vaporize the low-pressure refrigerant flowing through the TES 132. The resulting vapor may then be compressed and directed as a high-pressure, high-temperature fluid to the outdoor heat exchanger 112, while the outdoor fan 114 is deactivated. The hot refrigerant condenses in the outdoor heat exchanger 112, and the released heat melts the frost from the surfaces of the outdoor heat exchanger 112.

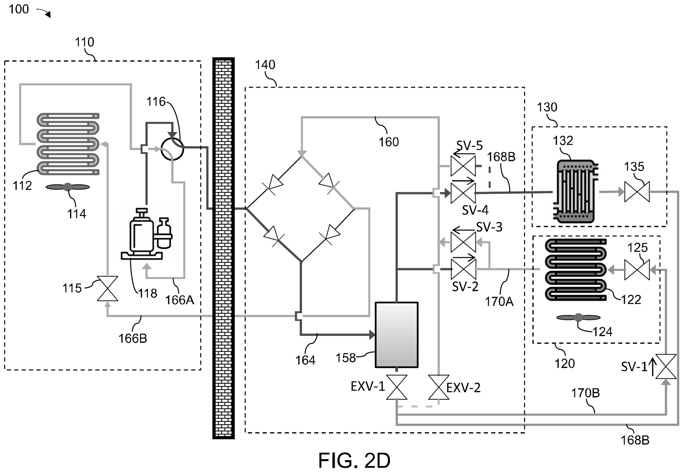

In one or more embodiments, the heat pump 100 may be operated in the cool energy charge operational mode and/or the combined space cooling and cool energy charge mode for energy load shifting (i.e., being able to operate in operational modes where heating or cooling is provided by the ODU 110 and/or the TES module 130). Such modes may be activated during periods of low energy demand or cost, such as overnight, or during periods when surplus renewable energy is available on the electrical grid. By charging the TES 132 during such periods, the heat pump 100 can create/store cooling capacity in anticipation of future cooling requirements. The created cooling capacity energy can then be discharged at a later time to provide space cooling through a cool energy discharge mode (as shown in FIG. 2D), thereby reducing energy consumption during peak demand hours when electricity costs may be higher.

Referring to FIG. 2D, a schematic diagram of the heat pump 100 operating in a cool energy discharge mode is shown. In one or more embodiments, the cool energy discharge operational mode may be configured to provide cooling to the indoor environment 102B by utilizing the cool thermal energy/cooling capacity previously created/stored in the TES module 130. The heat pump 100 may be operated in the cool energy discharge mode during periods of high energy demand or cost, as the compressor 118 and/or the outdoor fan 114 may operate at a reduced capacity, thereby reducing electrical consumption from the grid. In the cool energy discharge mode, the ODU 110 may be fluidically isolated.

In one or more embodiments, to initiate the cool energy discharge mode, the reversing valve 116 may be shifted to direct flow from the compressor 118 towards the IDU 120 and the TES module 130. A fluid, such as a refrigerant, may be circulated from the compressor 118 to the flow control assembly 140. The refrigerant may be compressed and pumped to the check valve assembly 145, which may direct the refrigerant through the supply line 164 to the selective flow assembly 150. Within the selective flow assembly 150, valves may be actuated to establish a refrigerant circuit with the TES module 130 and the IDU 120. For instance, solenoid valve SV-4 in the first selective flow subassembly 152, solenoid valve SV-3 in the second selective flow subassembly 154, and solenoid valve SV-1 may be shifted to an open position. Other valves, such as SV-5, and SV-2, may be closed. Further, the expansion devices/valves EXV-1 and EXV-2 may be shifted to a closed position, while the expansion devices 135 and 125 may be opened.

In one or more embodiments, a high-pressure vapor refrigerant from the compressor 118 may be flowed to the separator 158/tee junction. The refrigerant may then be directed through the open valve SV-4, and into the TES module 130 via the TES-assembly line 168A. The TES 132, having the cooling capacity or stored cool thermal energy, may function as a condenser. As the refrigerant passes through the TES 132, the refrigerant rejects heat to the TES 132, and condenses into cold liquid refrigerant.

In one or more embodiments, the cold liquid refrigerant exits the TES 132 and flows through the open TES expansion device 135. Since the expansion valves/devices EXV-1 and EXV-2 may be closed, the refrigerant may flow/be directed into the TES-assembly line 168B and the IDU-assembly line 170B. The liquid refrigerant may then be directed to the indoor expansion device 125. The indoor expansion device 125, which may be in an open or partially open position, allowing the refrigerant to enter the indoor heat exchanger 122.

In one or more embodiments, the cold liquid refrigerant then flows into the indoor heat exchanger 122, which functions as an evaporator. The indoor fan 124 may be actuated to circulate air from the indoor environment 102B across the coils of the indoor heat exchanger 122. The refrigerant absorbs heat from the indoor air, causing the refrigerant to evaporate completely into a low-pressure vapor refrigerant, and providing a cooling effect to the indoor environment 102B. Hence, in the cool energy discharge operational mode, the heat pump 100 effectively discharges the cool energy/cooling capacity that was stored in the TES 132 for cooling the indoor environment 102B.

In one or more embodiments, the low-pressure vapor exits the IDU 120 via the IDU-assembly line 170A and returns to the selective flow assembly 150. With valve SV-3 in an open position, the vapor flows through the second selective flow subassembly 154 and into the return line 160. From the return line 160, the refrigerant passes through the check valve assembly 145, which directs the refrigerant back to the ODU 110 and through the reversing valve 116 to the suction inlet of the compressor 118, thereby completing the cycle. However, the ODU 110 may be operated at reduced capacity. For instance, the outdoor fan 114 may be de-actuated or switched off. The reduced operational capacity may allow the heat pump 100 to provide space cooling during high energy demand periods while minimizing electrical consumption from the grid.

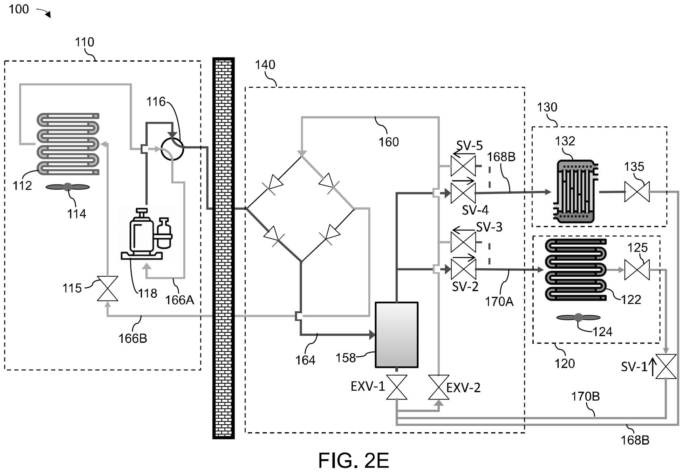

Referring to FIG. 2E, a schematic diagram of the heat pump 100 operating in a space heating mode is shown. In one or more embodiments, the space heating operational mode may be configured to provide heating to the indoor environment 102B by absorbing heat from the outdoor environment 102A and rejecting that heat into the indoor environment 102B.

In one or more embodiments, in the space heating operational mode, the reversing valve 116 may be actuated to reverse the direction of refrigerant flow compared to the cooling modes (as shown in FIGs. 2A to 2C), with a refrigerant flow direction similar to the configuration in FIG. 2D. The compressor 118 may be configured to compress the refrigerant to a high-pressure, high-temperature vapor refrigerant. The reversing valve 116 directs the hot vapor refrigerant into the flow control assembly 140. The hot vapor flows through the check valve assembly 145, into the supply line 164, and subsequently into the separator 158/tee junction.

In one or more embodiments, within the selective flow assembly 150, valves are actuated to direct the high-pressure vapor to the IDU 120. Accordingly, solenoid valve SV-2 may be shifted to an open position, allowing the hot vapor to flow from the supply line 164 into the IDU-assembly line 170A, and subsequently into the IDU 120.

In some embodiments, the TES module 130 may be fluidically isolated from the flow control assembly 140 and/or the IDU 120. In such embodiments, valves associated with the TES module 130, such as SV-4 and SV-5, and/or the TES expansion device 135 may be in a closed position. In other embodiments, a valve associated with the TES module 130 (such as SV-4) may be shifted to a partially or slightly open position. In such embodiments, a small amount of refrigerant to flow to the TES module 130, which may prevent the accumulation of lubricating oil within the TES 132 during prolonged heating operation. The refrigerant flowed through the TES 132 and/or the TES expansion device 135 may be circulated through the TES-assembly line 168B. Since the expansion valve/device EXV-2 may be open, the refrigerant may flow to the return line 160 through the expansion valve/device EXV-2.

In one or more embodiments, the indoor heat exchanger 122 may function as a condenser. As the high-pressure vapor flows through the indoor heat exchanger 122, the vapor refrigerant may reject heat to the indoor environment 102B, providing a heating effect. The indoor fan 124 may be actuated to circulate indoor air across the heat exchanger coils to distribute the heat. As the refrigerant rejects heat, the refrigerant condenses into a (high-pressure) liquid refrigerant. The liquid refrigerant may then exit the IDU 120.

In one or more embodiments, the liquid refrigerant from the IDU 120, and/or the refrigerant from the TES module 130 (if flowing), are directed back to the flow diversion assembly 156. The liquid refrigerant may exit the IDU 120 via the IDU-assembly line 170B. To facilitate this return, the solenoid valve SV-1 may be opened. The refrigerant from the TES module 130 may pass through the TES expansion device 135 and flow via the TES-assembly line 168B. Both lines 170B and 168B may converge at the flow diversion assembly 156. Since the expansion valve/device EXV-2 in the flow diversion assembly 156 may be in an open position, the returning refrigerant from both paths is directed into the return line 160 through the expansion valve/device EXV-2.

In one or more embodiments, from the return line 160, the high-pressure liquid refrigerant passes through the check valve assembly 145 and is directed back to the ODU 110. The refrigerant may then be expanded to a low-pressure, low-temperature state by the outdoor expansion device 115. The low-pressure refrigerant flows into the outdoor heat exchanger 112, which now functions as an evaporator, absorbing heat from the outdoor air/environment 102A. The resulting low-pressure and heated vapor refrigerant may then be directed by the reversing valve 116 back to the suction inlet of the compressor 118, completing the heating cycle.

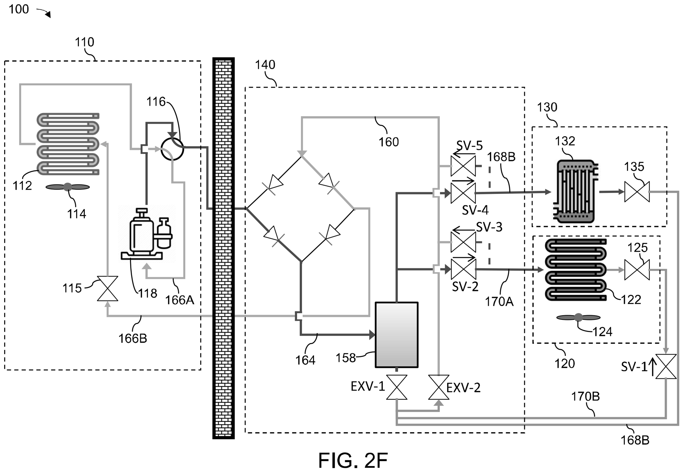

Referring to FIG. 2F, a schematic diagram of the heat pump 100 operating in a combined space heating and heat energy charge mode is shown. In one or more embodiments, the combined space heating and heat energy charge operational mode may be configured to simultaneously provide heating to the indoor environment 102B while also charging the TES module 130 with thermal energy (i.e., heat energy storage). The heat pump 100 may be operated in the combined space heating and heat energy charge mode for storing excess heat generated during normal heating operation, such as during periods of low energy demand or cost, for later use.

In one or more embodiments, in the combined space heating and heat energy charge mode, the refrigerant flow path for providing space heating may be substantially identical to the path described for the space heating mode (with reference to FIG. 2E). The compressor 118 directs a high-pressure, high-temperature vapor refrigerant through the flow control assembly 140 through the supply line 164. The hot vapor refrigerant may be directed through the open solenoid valve SV-2 to the IDU 120, where the vapor refrigerant condenses in the indoor heat exchanger 122 while providing heat to the indoor space.

In one or more embodiments, to enable the simultaneous charging of the TES module 130, a portion of the high-pressure vapor refrigerant from the supply line 164 may be diverted to the TES module 130 in parallel with the flow to the IDU 120. Accordingly, the solenoid valve SV-4 in the first selective flow subassembly 152 may be shifted to a fully open position. The hot vapor refrigerant may be directed to flow through the open valve SV-4 and into the TES module 130 via the TES-assembly line 168A.

In one or more embodiments, the TES 132 may be configured to absorb heat from the vapor refrigerant. As the high-pressure vapor refrigerant flows through the TES 132, the vapor refrigerant may reject heat to the TES 132. The TES 132 may absorb and store the energy in the refrigerant. The refrigerant may condense into a high-pressure liquid refrigerant, which may be flowed through the TES expansion device 135 in a fully open position, to the flow control assembly 140, such as the flow diversion assembly 156.

In one or more embodiments, the high-pressure liquid refrigerant from the TES module 130 and the high-pressure liquid refrigerant from the IDU 120 may be directed back to the flow diversion assembly 156. The liquid refrigerant from the TES module 130 flows via the TES-assembly line 168B, and the liquid refrigerant from the IDU 120 flows via the IDU-assembly line 170B (through the open solenoid valve SV-1). Since the expansion valve/device EXV-2 may be in an open position, the combined liquid refrigerant streams are directed into the return line 160. From the return line 160, the refrigerant passes through the check valve assembly 145, and returns to the ODU 110. In the ODU 110, the refrigerant may be expanded by the outdoor expansion device 115, and evaporated in the outdoor heat exchanger 112 before returning to the compressor 118 to complete the cycle.

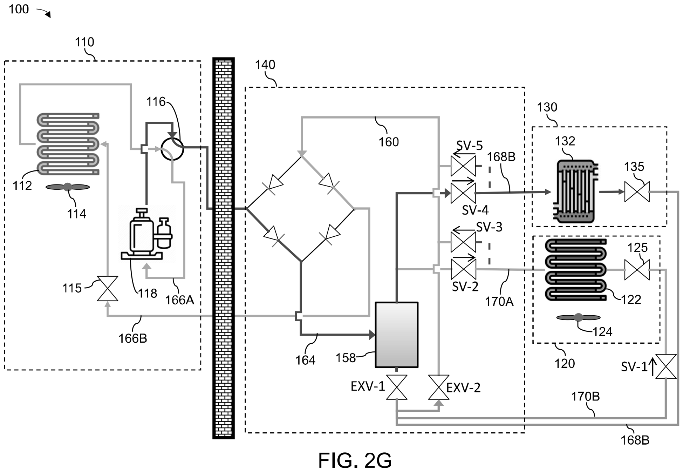

Referring to FIG. 2G, a schematic diagram of the heat pump 100 operating in a heat energy charge mode is shown. In one or more embodiments, the heat energy charge operational mode may be configured to store thermal energy in the TES module 130, without providing simultaneous heating to the indoor space. The heat energy charge mode may be used to store heat during periods of low energy demand or cost for later use in space heating or defrost operations. In the heat energy charge mode, the IDU 120 may be fluidically isolated from the flow control assembly 140.

In one or more embodiments, in the heat energy charge mode, the refrigerant flow path may be initiated similarly to the space heating modes (with reference to FIGs. 2E and 2F). The compressor 118 compresses the refrigerant to a high-pressure, high-temperature vapor, and the reversing valve 116 directs the vapor into the supply line 164 of the flow control assembly 140.

In one or more embodiments, within the selective flow assembly 150, valves are actuated to direct the flow of hot vapor refrigerant from the supply line 164 to the TES module 130. Accordingly, valves associated with the IDU 120 (such as SV-2, SV-3, and SV-1) may be shifted to a closed position. To direct the refrigerant to the TES module 130, solenoid valve SV-4 in the first selective flow subassembly 152 may be shifted to a fully open position.

In one or more embodiments, the high-pressure vapor refrigerant flows from the separator 158/tee junction from the supply line 164, through the open valve SV-4, and into the TES 132 via the TES-assembly line 168A. The TES 132 may be configured to absorb heat from the refrigerant, and store the heat as the thermal energy therein. As the refrigerant rejects heat, the refrigerant condenses into a high-pressure liquid refrigerant. The liquid refrigerant then flows through the TES expansion device 135, which may be in a fully open position.

In one or more embodiments, the high-pressure liquid refrigerant exits the TES module 130 and is directed to the flow diversion assembly 156 via the TES-assembly line 168B. Since the expansion valve/device EXV-2 may be in an open position, the liquid refrigerant is directed into the return line 160. From the return line 160, the refrigerant passes through the check valve assembly 145, returns to the ODU 110, is expanded by the outdoor expansion device 115, and is evaporated in the outdoor heat exchanger 112 before returning to the compressor 118 to complete the cycle.

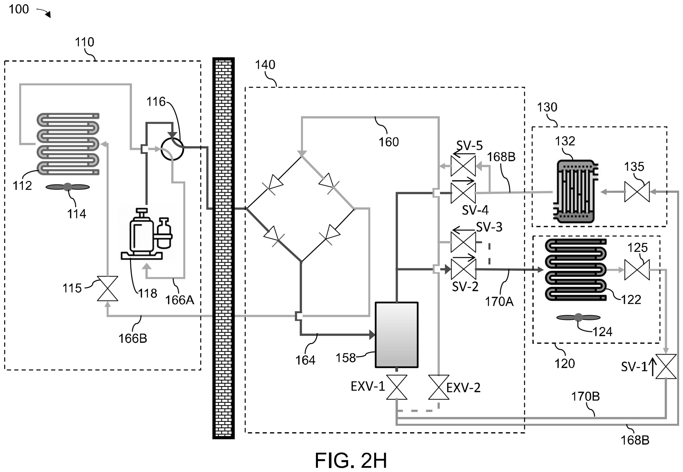

Referring to FIG. 2H, a schematic diagram of the heat pump 100 operating in a heat energy discharge mode is shown. The heat energy discharge operational mode may be configured to provide heating to the indoor environment 102B by utilizing the thermal energy stored in the TES module 130. In one or more embodiments, the heat pump 100 may be configured to operate in the heat energy discharge mode during periods of high energy demand or when the outdoor ambient temperature is very low, thereby allowing for space heating without relying on the outdoor heat exchanger 112 as a primary heat source. In the heat energy discharge operational mode, the ODU 110 may be operated with reduced capacity. For instance, the outdoor fan 114 may be deactivated.

In one or more embodiments, in the heat energy discharge mode, the compressor 118 compresses the refrigerant to a high-pressure, high-temperature vapor. The reversing valve 116 is positioned to direct this hot vapor into the flow control assembly 140 via the supply line 164. Within the selective flow assembly 150, valves are actuated to direct the hot vapor refrigerant to the IDU 120. For instance, solenoid valve SV-2 may be shifted to an open position, allowing the vapor to flow from the separator 158/tee junction into the IDU-assembly line 170A.

In one or more embodiments, the high-pressure vapor refrigerant is directed to the IDU 120, where the indoor heat exchanger 122 functions as a condenser. The indoor fan 124 is actuated, and as the refrigerant flows through the indoor heat exchanger 122, the refrigerant may reject heat to the indoor air/environment 102B, providing a heating effect. During the heat exchange, the refrigerant may condense into a high-pressure liquid. The liquid refrigerant then exits the IDU 120 via the IDU-assembly line 170B.

In one or more embodiments, the high-pressure liquid refrigerant may then be directed to the TES module 130. The liquid refrigerant flows from line 170B, through the open solenoid valve SV-1, to the flow diversion assembly 156. Since expansion valves/devices and EXV-1 and EXV-2 are closed, the liquid refrigerant may be directed to the TES module 130 through the TES-assembly line 168B. The refrigerant enters the TES module 130. In one or more embodiments, the refrigerant may pass through the TES expansion device 135 before entering the TES module 130.

In one or more embodiments, the TES 132 at the TES module 130 may store thermal energy. The TES module 130 may be configured to function as an evaporator. As the cold, low-pressure liquid refrigerant flows through the TES 132, the refrigerant may absorb the stored heat from the TES 132. The absorption of heat causes the refrigerant to evaporate into a low-pressure vapor refrigerant. Hence, the thermal energy stored in the TES 132 may be discharged into the refrigerant, for the subsequent heating cycles.

In one or more embodiments, the vapor refrigerant may exit the TES module 130 via the TES-assembly line 168A, and directed towards the first selective flow subassembly 152. To complete the cycle, solenoid valve SV-5 is opened, allowing the vapor refrigerant to flow into the return line 160. From the return line 160, the refrigerant passes through the check valve assembly 145 and is directed back to the ODU 110. Although the outdoor fan 114 may be inactive, the refrigerant flows through the reversing valve 116 to the suction inlet of the compressor 118 to be re-compressed. The recompressed and heated refrigerant may be circulated back to the IDU 120 to continue the heating cycle.

In one or more embodiments, while the selective flow assembly 150 and its sub-assemblies have been described to include solenoid valves (such as SV-1 to SV-5) and expansion valves (such as EXV-1 and EXV-2), it may be appreciated that other devices and configurations may be used to achieve the selective direction of the fluid/refrigerant between the ODU 110, the IDU 120, and the TES module 130. For instance, a selective flow subassembly (such as 152 or 154), which is shown using a pair of parallel, unidirectional solenoid valves, may be replaced with a single three-way valve. Such a three-way valve may be actuated to selectively fluidically couple the corresponding TES-assembly line or IDU-assembly line with either the supply line 164 or the return line 160. Further, the expansion devices/valves (such as EXV-1 and EXV-2) within the flow diversion assembly 156 may be replaced with other types of directional control valves configured to selectively couple the IDU 120 and/or the TES module 130 with the supply or return lines, or with each other, to facilitate the various operational modes described herein.

In one or more embodiments, the heat pump 100/flow control assembly 140 may include a controller (not shown). In one or more embodiments, the controller may be operatively coupled to different valves of the heat pump 100. In one or more embodiments, the controller may also be operatively coupled to fans, such as outdoor fan 114 and/or indoor fan 124.

In one or more embodiments, the controller may include one or more processors, a memory, and an interface (not shown). The processors may be implemented as one or more microprocessors, microcomputers, microcontrollers, digital signal processors, central processing units, graphical processing units, logic circuitries, and/or any devices that manipulate data based on operational instructions. Among other capabilities, the processor may be configured to fetch and execute computer-readable instructions stored in a memory (not shown).

The memory may store the computer-readable instructions or routines, which may be fetched and executed to create or share the data units to other elements of the controller. The memory may include any non-transitory storage device including, for example, volatile memory such as Random Access Memory (RAM), or non-volatile memory such as an Erasable Programmable Read-Only Memory (EPROM), flash memory, and the like.

In one or more embodiments, the controller may be configured to control components of the heat pump 100 by transmitting electronic (control) signals thereto. The operation of the controller may reduce operational latency between the components of the heat pump 100, thereby improving precision of control and performance. Furthermore, the communication of the electronic control signals between the controller, and the components of the heat pump 100 may be achieved through an encryption authorization protocol, such as Transport Layer Security (TLS), Internet Protocol Security (IPsec), Symmetric-Key Encryption, custom cryptographic protocols, Secure Boot/Trusted Platform Modules (TPMs), Hardware Security Modules (HSMs), Building Automation and Control Network (BACnet) or BACnet Secure Connect (BACnet/SC), Modbus TLS, Power line Communication and the like, but not limited thereto. This secure transmission allows for security of the controller by preventing unauthorized access by nature of the secure transmission between the controller, and other components of the heat pump 100.

Described herein is a method for operating a heat pump, where the method comprises providing an ODU, an IDU, a TES module, and a flow control assembly, and controlling, by the controller, the flow control assembly to selectively direct a fluid between the ODU and at least one of the IDU and/or the TES module. The method may include selectively directing the fluid according to at least one of the operational modes shown in FIGS. 2A to 2H.

While the invention has been described with reference to exemplary embodiments, it will be understood by those skilled in the art that various changes may be made, and equivalents may be substituted for elements thereof without departing from the scope of the invention as defined by the appended claims. Modifications may be made to adapt a particular situation or material to the teachings of the invention without departing from the scope of the invention as defined by the appended claims. Therefore, it is intended that the invention is not limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A heat pump (100) comprising:
an outdoor unit, ODU, (110);
an indoor unit, IDU, (120);
a thermal energy storage, TES, module (130); and
a flow control assembly (140) comprising:
a check valve assembly (145) fluidically coupled to the ODU; and
a selective flow assembly (150) fluidically coupled to the check valve assembly and in selective fluidic communication with the IDU and/or the TES module, wherein the selective flow assembly is configured to selectively direct a fluid between the check valve assembly and at least one of: the IDU and/or the TES module.

2. The heat pump (100) of claim 1, wherein the TES module (130) comprises any or a combination of latent or sensible heat energy storage.

3. The heat pump (100) of claim 1 or 2, wherein one or more of the ODU (110), the TES module (130), and/or the flow control assembly (140) is disposed in an outdoor environment (102A); and/or
wherein one or more of the IDU (120), the TES module (130), and/or the flow control assembly (140) is disposed in an indoor environment (102B).

4. The heat pump (100) of any preceding claim, wherein one or more of the IDU (120), the TES module (130), and/or the ODU (110) comprises a corresponding expansion device (125, 135, 115).

5. The heat pump (100) of any preceding claim, further comprising at least one of: a supply line (164) and/or a return line (160) fluidically coupling the check valve assembly (145) to the selective flow assembly (150), wherein the selective flow assembly is configured to receive the fluid through the supply line from the check valve assembly and/or return the fluid through the return line to the check valve assembly.

6. The heat pump (100) of claim 5, wherein the selective flow assembly (150) comprises a receiving component configured to receive the fluid from the supply line (164), and optionally wherein the receiving component comprises at least one of: a separator (158) and/or a tee junction disposed between the check valve assembly (145) and the selective flow assembly (150).

7. The heat pump (100) of claim 5 or 6, wherein the selective flow assembly (150) further comprises at least one selective flow subassembly (152, 154) configured to fluidically couple the supply line (164) and/or the return line (160) to at least one of: the IDU (120) and/or the TES module (130), and wherein the at least one selective flow subassembly comprises:
a first valve configured to selectively enable fluidic communication between the supply line and at least one of: the IDU and/or the TES module; and
a second valve configured to selectively enable fluidic communication between the return line and at least one of: the IDU and/or the TES module.

8. The heat pump (100) of claim 7, wherein the first valve and the second valve comprise a unidirectional valve, optionally wherein the first valve and the second valve are disposed in parallel.

9. The heat pump (100) according to any of claims 5 to 8, wherein the selective flow assembly (150) further comprises a flow diversion assembly (156) fluidically coupling the supply line (164) to at least one of:
a TES-assembly line (168B) fluidically coupled to the TES module (130); and/or
an IDU-assembly line (170B) fluidically coupled to the IDU (120),
wherein the flow diversion assembly further comprises at least one directional control valve configured to selectively couple the TES-assembly line, the IDU-assembly line, and/or the supply line, and wherein the at least one directional control valve is configured to selectively direct the fluid from the supply line to at least one of: the TES module, and/or the IDU.

10. The heat pump (100) of claim 9, wherein the flow diversion assembly (156) is fluidically coupled to the return line (160), and wherein the flow diversion assembly further comprises another directional control valve configured to selectively direct the fluid from at least one of: the TES module (130) and/or the IDU (120) to the return line.

11. The heat pump (100) of claim 9 or 10, wherein the flow diversion assembly (156) is configured to selectively direct the fluid between the IDU (120) and the TES module (130); and/or
wherein the at least one directional control valve comprises a bidirectional valve.

12. The heat pump (100) according to any of claims 5 to 11, further comprising a first ODU-assembly line (166A) and a second ODU-assembly line (166B) fluidically coupling the check valve assembly (145) and the ODU (110), wherein the check valve assembly comprises a plurality of check valves fluidically coupled to receive the fluid from the return line (160) and/or the first ODU-assembly line, and direct the received fluid to at least one of: the supply line (164) and/or the second ODU-assembly line.

13. The heat pump (100) according to any preceding claim, wherein the ODU (110) comprises a reversing valve (116) configured to shift the heat pump to a space cooling operational mode or a space heating operational mode; and/or wherein the selective flow assembly (150) is configured to selectively flow the fluid through any one or a combination of the TES module (130) and/or the IDU (120) to shift the heat pump (100) to an energy charging mode or an energy discharging mode, and wherein the selective flow assembly is configured to operate the heat pump in one of: the energy charging mode or the energy discharging mode in any combination with the operation of the heat pump in one of: a space cooling operational mode or a space heating operational mode.

14. A flow control assembly (140) fluidically coupled to an outdoor unit, ODU, (110), an indoor unit, IDU, (120), and/or a thermal energy storage, TES, module (130), the flow control assembly comprising:
a check valve assembly (145) fluidically coupled to the ODU; and
a selective flow assembly (150) fluidically coupled to the check valve assembly and in selective fluidic communication with the IDU and/or the TES module, wherein the selective flow assembly is configured to selectively direct a fluid between the check valve assembly and at least one of: the IDU and/or the TES module.

15. A method for operating a heat pump (100), the method comprising:
providing an outdoor unit, ODU, (110), an indoor unit, IDU, (120), a thermal energy storage (TES) module (130), and a flow control assembly (140); and
controlling, by a controller, the flow control assembly to selectively direct a fluid between the ODU and at least one of: the IDU and/or the TES module.
